# EUROPÄISCHE PATENTANMELDUNG

(11) **EP 0 913 425 A2**
(43) Veröffentlichungstag der Anmeldung: **06.05.1999**
(21) Anmeldenummer: 98118983.0
(22) Anmeldetag: 07.10.1998
(51) Int. Cl.: C08J 9/224, C08J 9/228, C08L 25/04

(54) **Beschichtete expandierbare Polystyrolpartikel**

(30) Priorität: 28.10.1997 DE 19747538
(71) Anmelder: BASF AKTIENGESELLSCHAFT, 67056 Ludwigshafen (DE)
(72) Erfinder: Hahn, Klaus, Dr., 67281 Kirchheim (DE); Löffler, Achim, Dr., 76137 Karlsruhe (DE); Steinbrecher, Horst, 67354 Römerberg (DE); Naegele, Dieter, Dr., 67550 Worms (DE); Hohwiller, Frieder, 67098 Bad Dürkheim (DE)

(57) **Zusammenfassung**

Die Erfindung betrifft treibmittelhaltige, expandierbare Polystyrol-Partikel, die mit 0,01 bis 0,5 Gew.-% eines organischen Kieselsäurederivats als Hydrophobierungsmittel beschichtet sind, welches unterhalb von 10°C schmilzt . Die Partikel sind zu Schaumstoff-Formkörpern mit verminderter Wasseraufnahmefähigkeit verarbeitbar.

## Beschreibung

Die Erfindung betrifft treibmittelhaltige, expandierbare Polystyrol(EPS)-Partikel, aus denen Formkörper mit verminderter Wasseraufnahmefähigkeit bzw. verringerter Wasserdurchlässigkeit hergestellt werden können.

Bei vielen Einsatzgebieten von Polystyrolschaumstoffen, beispielsweise für Dachisolierungen, Perimeterdämmung oder Fischkisten, kommt es zu einer Einwirkung von Wasser auf die Schaumstoff-Formteile. Dabei besteht die Gefahr, daß Feuchtigkeit in das Innere des Schaumstoffs eindringt, was zu einer Verringerung der Isolierwirkung führt.

Bisher wurde die Wasseraufnahme von Platten und Formteilen aus Polystyrolpartikelschaum zumeist durch Aufbringen einer Kunststoffolie oder Lackierung der fertigen Formteile verhindert bzw. verringert. Das erfordert jedoch einen zusätzlichen Verfahrensschritt, außerdem ist bei komplizierten Formen dieser Überzug nicht überall gleichmäßig.

Eine weitere Möglichkeit der Minimierung des Wassereintritts in Formteile aus Polystyrol-Partikelschaum besteht darin, das Volumen zwischen den EPS-Partikeln, die sogenannten Zwickel, möglichst gering zu halten. Das kann erreicht werden durch Erhöhung von Druck und Temperatur des zum Ausschäumen verwendeten Wasserdampfes. Nachteilig ist hierbei jedoch, daß dadurch die Herstellungszeit der Formteile erhöht wird, und daß bei Erhöhung der Temperatur ein erhöhter Energieverbrauch bei der Formteilherstellung resultiert.

Die PCT-Patentanmeldung PCT/DE 97/02 362 betrifft EPS-Partikel mit verminderter Wasseraufnahme, die mit einem Hydrophobierungsmittel beschichtet sind. Als geeignete Hydrophobierungsmittel sind Paraffinwachse, Umsetzungsprodukte aus einem N-Methylolamin und einem Fettsäurederivat, sowie Polyfluoralkyl(meth)acrylate genannt.

Aufgabe der vorliegenden Erfindung war es, weitere Polystyrolpartikelschaumstoffe mit verminderter Wasseraufnahmefähigkeit bereitzustellen, die einfach und ohne zusätzliche Verfahrensschritte hergestellt werden können.

Diese Aufgabe wird gelöst durch treibmittelhaltige EPS-Partikel, die mit einem Hydrophobierungsmittel beschichtet sind. Gegenstand der Erfindung sind demzufolge treibmittelhaltige, expandierbare Polystyrol(EPS)-Partikel, die mit 0,01 bis 0,5 Gew.-% eines organischen Kieselsäurederivats als Hydrophobierungsmittel beschichtet sind, welches unterhalb von 10°C schmilzt. Ein weiterer Gegenstand der Erfindung sind entsprechend beschichtete expandierte Polystyrolpartikel.

Es ist üblich, EPS-Partikel mit Stearaten, z.B. Glycerinmonostearat oder Zinkstearat als Mittel zur Verkürzung der Kühlzeit zu beschichten. Diese Stearate wirken jedoch nicht als Hydrophobierungsmittel. Man hat auch schon flüssige Paraffinöle zur Verkürzung der Kühlzeit bei der Formteilherstellung auf EPS-Partikel aufgebracht, was aber zu verringerter Expandierfähigkeit führt.

EPS-Partikel werden nach an sich üblichen und bekannten Verfahren hergestellt. Dazu wird das monomere Styrol, gegebenenfalls im Gemisch mit anderen olefinisch ungesättigten Comonomeren, Initiatioren, Hilfs- und Zusatzstoffen in Wasser suspendiert und in Gegenwart von Suspensionsstabilisatoren polymerisiert. Die entstehenden Polystyrolperlen werden abgetrennt, gewaschen und getrocknet. Die Zugabe des Treibmittels kann dabei bereits während der Polymerisation erfolgen, es ist jedoch auch möglich, das Treibmittel in einem nachfolgenden Verfahrensschritt in die Polystyrolperlen einzubringen. Geeignete Treibmittel sind C₄-C₈-Kohlenwasserstoffe, vorzugsweise Pentan.

Die EPS-Partikel sind erfindungsgemäß mit 0,01 bis 0,5, vorzugsweise mit 0,1 bis 0,3 Gew.-%, jeweils bezogen auf Feststoff, des organischen Kieselsäurederivats beschichtet, welches unterhalb von 10°C schmilzt.

Folgende Kieselsäurederivate sind geeignet:
A. Tetraester der Kieselsäure mit einem C₅- bis C₃₀-, vorzugsweise einem C₁₃ bis C₁₅-Oxoalkohol. Als Beispiel sei das Handelsprodukt SILIGEN E der BASF AG genannt.
B. Polydialkylsiloxane, vorzugsweise Polydimethylsiloxane, die auch Aminoalkylgruppen enthalten können. Ein Beispiel ist das Handelsprodukt SILIGEN SIO der BASF AG.
C. Polyalkylsiloxane mit endständigen Carbonsäure- bzw. Carbonsäureanhydrid-Gruppen. Ein Beispiel ist das Silikonöl IM 86 der Firma Wacker.
D. Mischungen der beschriebenen Kieselsäurederivate, sowie Mischungen mit anderen Hydrophobierungsmitteln.

Die Herstellung der erfindungsgemäßen EPS-Partikel erfolgt vorzugsweise durch Beschichten mit einer wäßrigen Emulsion der Hydrophobierungsmittel. In dieser Emulsion sind die Hydrophobierungsmittel in einer Menge von 10 bis 80 Gew.-%, vorzugsweise von 15 bis 50 Gew.-% enthalten. Darüber hinaus enthält die wäßrige Emulsion vorzugsweise übliche Emulgatoren, z.B. ethoxyliertes Oleylamin in Mengen von 0,5 bis 5 Gew.-%, sowie Lösungsvermittler und andere übliche Zusatzstoffe.

Die wäßrige Emulsion des Hydrophobierungsmittels wird vorzugsweise auf die EPS-Partikel unmittelbar nach der Aufarbeitung und Trocknung aufgebracht und zwar zweckmäßigerweise zusammen mit anderen üblichen Beschichtungsmitteln, wie Antiverklebungsmitteln, z.B. Metallstearate und feinteilige Kieselsäure, sowie Mitteln zur Verkürzung der Entformzeit, wie Glycerinester und Hydroxycarbonsäureester. Man kann die flüssigen Hydrophobierungsmittel auch an porenhaltige Feststoffe, wie z.B. feinteilige Kieselsäure adsorbieren, vorzugsweise in Mengen von 5 bis 50 Gew.-%, und damit die Beschichtung vornehmen. Da durch die Beschichtung mit dem Hydrophobierungsmittel die Entflammbarkeit der Schaumstoffe heraufgesetzt werden kann, ist es in manchen Fällen zweckmäßig, zusammen mit dem Hydrophobierungsmittel auch noch Flammschutzmittel, z.B. Bromverbindungen wie Hexabromcyclododecan, in Mengen von 0,01 bis 0,5 Gew.-%, bezogen auf EPS, aufzubringen. Es ist grundsätzlich auch möglich, die wäßrige Emulsion auf vorgeschäumte EPS-Partikel aufzubringen. In beiden Fällen erfolgt der Auftrag durch Besprühen oder vorzugsweise durch Auftrommeln in einem üblichen Trommelmischer.

Schließlich kann man das Hydrophobierungsmittel auch bei der Herstellung der EPS-Partikel durch Polymerisation von Styrol in wäßriger Suspension zusetzen.

Nach der Behandlung der EPS-Partikel mit den Hydrophobierungsmitteln werden die Partikel getrocknet. Das geschieht üblicherweise mit Luft bei Raumtemperatur oder leicht erhöhter Temperatur, die jedoch bei der Behandlung von unverschäumten Partikeln soweit unterhalb ihrer Erweichungstemperatur liegen muß, daß ein unbeabsichtigtes Aufschäumen und ein Entweichen des Treibmittel verhindert wird. Die EPS-Partikel weisen im allgemeinen eine Partikelgröße von 0,1 bis 3 mm, insbesondere von 0,3 bis 2,0 mm auf.

Die Verschäumung der mit Treibmittel enthaltenden EPS-Partikel zu Schaumstoffen erfolgt üblicherweise ebenfalls nach den im Stand der Technik bekannten Verfahren, indem sie zunächst mit Wasserdampf in offenen oder geschlossenen Vorschäumern vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im allgemeinen eine mittlere Partikelgröße von 1 bis 10 mm, insbesondere von 2 bis 8 mm auf.

Weitere Angaben zu den üblichen Polymerisations-, Imprägnier-, und Schäumverfahren finden sich beispielsweise im Kunststoffhandbuch, Band 5, Polystyrol, herausgegeben von R. Vieweg und G. Daumiller, Carl-Hanser-Verlag München, 1969.

Überraschenderweise kommt es durch die erfindungsgemäße Behandlung mit den Hydrophobierungsmitteln zu keinerlei Nachteilen bei den mechanischen und den Verarbeitungseigenschaften der Styrolpolymerisate Es treten auch keine Erhöhungen der Entformzeiten auf.

Hydrophobierungsmittel werden normalerweise angewandt um flächige Materialien, wie Textilien, Leder oder Papier wasserabstoßend zu machen. Es war nicht zu erwarten, daß sie - auf expandierbare Partikel aufgebracht - nach deren Aufschäumen und Versintern zu einem Formteil dieses wasserundurchlässig machen können, und daß durch die Beschichtung die Verschweißung der expandierten Partikel nicht behindert wird.

Die erfindungsgemäßen expandierten Polystyrolpartikel können mit Vorteil zur Herstellung von solchen Formteilen eingesetzt werden, die ständiger Wassereinwirkung ausgesetzt sind, z.B. für Platten für die Dachisolierung oder Perimeterdämmung, für Schwimmkörper oder wasserempfindliche Verpackungsmaterialien, wie Fischkisten.

Die in den Beispielen genannten Prozente beziehen sich auf das Gewicht.

Die Wasseraufnahme wurde nach DIN 53 433 gemessen, die Wasserdurchlässigkeit nach folgender Methode: Auf eine Schaumstoffplatte einer Dicke von 100 mm wurde ein Rohr von 100 mm Durchmesser geklebt und mit einer Wassersäule von 100 mm Höhe gefüllt.

Nach 24 Stunden wurde geprüft, ob auf der Unterseite der Schaumstoffplatte ein Wasseraustritt zu beobachten ist. Das Absenken des Wasserspiegels wurde in mm Wassersäule gemessen. Vor den Versuchen wurden die Schaumstoffplatten 24 Stunden im Trockenschrank bei 60°C konditioniert. Danach wurden die Rohre mittels Silikonkautschuk aufgeklebt.

### Beispiel 1

In einem Schaufelmischer mit einem Volumen von 40 l wurden 25 kg EPS (Perlgröße 0,4-0,7 mm, Pentangehalt 6,1 %) mit den in der Tabelle 1 aufgegebenen Beschichtungsmitteln 10 min bei 25°C intensiv gemischt.

Anschließend wurden die beschichteten Perlen in einem drucklosen Schäumkasten (System Rauscher) vorgeschäumt und nach 12 Stunden zu plattenförmigen Formteilen (Raumgewicht 20 kg/m³) verarbeitet.

Tabelle 1 zeigt die Zusammensetzung der Beschichtungen und die gemessenen Eigenschaften der Platten. Der Versuch 1 ist nicht erfindungsgemäß.

**Tabelle 1**

| Versuch | Beschichtung % bezogen auf EPS | Wasseraufnahme % | Wasserdichtigkeit mm |
|---|---|---|---|
| 1 | 0,25 GMS | 5,8 | 28 |
| | 0,12 Aerosil R 972 | | |
| | 0,13 Zn-Stearat | | |
| 2 | 0,25 GMS | 0,50 | 6 |
| | 0,12 Aerosil R 972 | | |
| | 0,13 Zn-Stearat | | |
| | 0,20 SILIGEN ESI | | |
| GMS = technisches Glycerinmonostearat Aerosil R 972 = feinteilige Kieselsäure (Fa. DEGUSSA) SILIGEN ESI = 80 % SILIGEN E (40 % Tetraester der Kieselsäure mit C₁₃-C₁₅-Oxoalkohol, 11 % Aceton, 1,7 % Oleylalkohol mit 22 Mol Ethylenoxid veräthert, Rest Wasser) 20 % SILIGEN SIO (32 % Polydimethylsiloxan mit Aminoalkylgruppen, 9 % Isodecanol mit 7 Mol Ethylenoxid veräthert, 1,5 % Essigsäure, Rest Wasser) | | | |

## Patentansprüche

1. Treibmittelhaltige, expandierbare Polystyrol (EPS)-Partikel, die mit 0,01 bis 0,5 Gew.-% eines Hydrophobierungsmittels beschichtet sind, welches unterhalb von 10°C schmilzt, dadurch gekennzeichnet, daß das Hydrophobierungsmittel ein organisches Kieselsäurederivat ist.

2. Expandierbare Polystyrolpartikel nach Anspruch 1, dadurch gekennzeichnet, daß das Kieselsäurederivat ein Tetraester der Kieselsäure mit einem C₅- bis C₃₀-Oxoalkohol ist.

3. Expandierbare Polystyrolpartikel nach Anspruch 1, dadurch gekennzeichnet, daß das Kieselsäurederivat ein Polydialkylsiloxan ist.

4. Expandierbare Polystyrolpartikel nach Anspruch 1, dadurch gekennzeichnet, daß das Kieselsäurederivat ein Polyalkylsiloxan mit endständigen Carbonsäure- oder Carbonsäureanhydridgruppen ist.

5. Expandierbare Polystyrolpartikel nach Anspruch 1, dadurch gekennzeichnet, daß sie mit einer wäßrigen Emulsion des Hydrophobierungsmittels beschichtet wurden.

6. Verfahren zur Herstellung der expandierbaren Polystyrolpartikel nach Anspruch 1, dadurch gekennzeichnet, daß man expandierbare Polystyrolpartikel mit einer wäßrigen Emulsion behandelt, die 10 bis 80 Gew.-% des Hydrophobierungsmittels enthält.

7. Verfahren nach Anspruch 6, dadurch gekennzeichnet, daß die wäßrige Emulsion zusätzlich einen Emulgator und/oder einen Lösungsvermittler enthält.

8. Verfahren nach Anspruch 6, dadurch gekennzeichnet, daß zusätzlich zu dem Hydrophobierungsmittel noch Flammschutzmittel und/oder Antiverklebungsmittel und/oder Mittel zur Verkürzung der Entformzeit auf die EPS-Partikel aufgebracht werden.

9. Verfahren nach Anspruch 6, dadurch gekennzeichnet, daß die Behandlung durch Besprühen oder Auftrommeln vorgenommen wird.

10. Verfahren nach Anspruch 6, dadurch gekennzeichnet, daß die wäßrige Emulsion des Hydrophobierungsmittels in feinteiliger Kieselsäure aufgenommen wird, und die expandierbaren Polystyrolpartikel mit der dabei entstandenen Pulvermischung beschichtet werden.

11. Verfahren zur Herstellung der expandierbaren Polystyrolpartikel nach Anspruch 1, dadurch gekennzeichnet, daß das Hydrophobierungsmittel an feinteiliger Kieselsäure adsorbiert wird, und die EPS-Partikel damit beschichtet werden.

12. Verfahren zur Herstellung der expandierbaren Polystyrolpartikel nach Anspruch 1, dadurch gekennzeichnet, daß das Hydrophobierungsmittel bei der Herstellung der EPS-Partikel durch Polymerisation von Styrol in wäßriger Suspension zugesetzt wird.

13. Expandierte Polystyrolpartikel, dadurch gekennzeichnet, daß sie mit 0,01 bis 0,5 Gew.-% des Hydrophobierungsmittels nach Anspruch 1 beschichtet sind.

14. Verfahren zur Herstellung von expandierten Polystyrolpartikeln, dadurch gekennzeichnet, daß man beschichtete EPS-Partikel nach Anspruch 1 verschäumt.

15. Verfahren zur Herstellung von expandierten Polystyrolpartikeln, dadurch gekennzeichnet, daß man expandierte Polystyrolpartikel mit 0,01 bis 0,5 Gew.-% des Hydrophobierungsmittels nach Anspruch 1 beschichtet.

16. Verwendung der expandierten Polystyrolpartikel nach Anspruch 13 zur Herstellung von Dachisolierungen, Perimeterdämmplatten, Schwimmkörpern oder wasserempfindlichen Verpakkungsmaterialien.
